# EUROPÄISCHE PATENTSCHRIFT

(11) **EP 1 854 973 B1**
(45) Veröffentlichungstag und Bekanntmachung des Hinweises auf die Patenterteilung: **14.03.2012**
(21) Anmeldenummer: 07101318.9
(22) Anmeldetag: 29.01.2007
(51) Int. Cl.: F01N 3/20, B01D 53/94

(54) **Verfahren zur Dosierung von festem Harnstoff (CO(NH2)2) und Vorrichtung zur Durchführung eines derartigen Verfahrens**
Method for dosing solid urea (CO(NH2)2) and device for applying such a method
Procédé destiné au dosage d'urées solides (CO(NH2)2) et dispositif d'exécution d'un tel procédé

(30) Priorität: 11.05.2006 DE 102006021877
(43) Veröffentlichungstag der Anmeldung: 14.11.2007
(73) Patentinhaber: Ford Global Technologies, LLC, Dearborn, MI 48126 (US)
(72) Erfinder: Reichert, Martina, 50679 Koeln (DE); Bartsch, Leonhard, 52074 Aachen (DE)
(74) Vertreter: Drömer, Hans-Carsten

(56) Entgegenhaltungen:
- EP-A- 0 878 608
- EP-A- 1 338 562
- DE-A1- 10 323 591
- DE-A1- 19 845 944
- DE-C1- 19 727 268
- US-A- 5 809 775

## Beschreibung

Die Erfindung betrifft ein Verfahren zur Dosierung von festem Harnstoff (CO(NH₂)₂), insbesondere zur Verwendung als Reduktionsmittel für einen SCR-Katalysator, bei dem
■ der Harnstoff in fester Form mittels einer Dosiereinheit einem Reaktor zugeführt wird, und
■ der zugeführte Harnstoff in Wechselwirkung mit einem beheizbaren Reaktorelement des Reaktors im Rahmen einer thermolytischen Reaktion unter Energieeintrag in Ammoniak (NH₃) und Isocyansäure (HNCO) aufgespalten wird.

Nach dem Stand der Technik werden Brennkraftmaschinen zur Reduzierung der Schadstoffemissionen mit verschiedenen Abgasnachbehandlungssystemen ausgestattet.

Zwar findet auch ohne zusätzliche Maßnahmen während der Expansion und des Ausschiebens der Zylinderfüllung bei einem ausreichenden hohen Temperaturniveau und dem Vorhandensein genügend großer Sauerstoffmengen eine Oxidation der unverbrannten Kohlenwasserstoffe (HC) und von Kohlenmonoxid (CO) statt. Diese Reaktionen kommen aber aufgrund der stromabwärts schnell abnehmenden Abgastemperatur und der infolgedessen rapide sinkenden Reaktionsgeschwindigkeit schnell zum Erliegen. Eventueller Sauerstoffmangel kann durch eine Sekundärlufteinblasung kompensiert werden. Jedoch müssen in der Regel besondere Reaktoren und/oder Filter im Abgastrakt vorgesehen werden, um die Schadstoffemissionen unter sämtlichen Betriebsbedingungen spürbar zu reduzieren.

Thermische Reaktoren versuchen, eine weitgehende Nachoxidation von HC und CO im Abgassystem zu erzielen, indem eine Wärmeisolation und ein ausreichend großes Volumen im Abgasrohr des Abgassystems vorgesehen sind. Die Wärmeisolation soll ein möglichst hohes Temperaturniveau durch Minimierung der Wärmeverluste sicherstellen, wohingegen ein großes Abgasrohrvolumen eine lange Verweildauer der Abgase gewährleistet. Sowohl die lange Verweildauer als auch das hohe Temperaturniveau unterstützen die angestrebte Nachoxidation. Für Dieselmotoren sind thermische Reaktoren aufgrund des grundsätzlich niedrigeren Temperaturniveaus nicht zielführend.

Aus den genannten Gründen kommen nach dem Stand der Technik bei Ottomotoren katalytische Reaktoren zum Einsatz, die unter Verwendung katalytischer Materialien, die die Geschwindigkeit bestimmter Reaktionen erhöhen, eine Oxidation von HC und CO auch bei niedrigen Temperaturen sicherstellen. Sollen zusätzlich Stickoxide reduziert werden, kann dies durch den Einsatz eines Dreiwegkatalysators erreicht werden, der dazu aber einen in engen Grenzen ablaufenden stöchiometrischen Betrieb (λ ≈ 1) des Ottomotors erfordert.

Dabei werden die Stickoxide NOₓ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden.

Bei Brennkraftmaschinen, die mit einem Luftüberschuss betrieben werden, also beispielsweise im Magerbetrieb arbeitende Ottomotoren, insbesondere aber direkteinspritzende Dieselmotoren aber auch direkteinspritzende Ottomotoren, können die im Abgas befindlichen Stickoxide prinzipbedingt - d. h. aufgrund der fehlenden Reduktionsmittel - nicht reduziert werden. Zur Oxidation der unverbrannten Kohlenwasserstoffe (HC) und von Kohlenmonoxid (CO) wird daher ein Oxidationskatalysator im Abgassystem vorgesehen. Für eine spürbare d.h. ausreichende Konvertierung ist eine Mindesttemperatur - die sogenannte Anspringtemperatur - erforderlich, die beispielsweise zwischen 120°C bis 250°C betragen kann.

Die im Abgas befindlichen Stickoxide können mittels sogenannter Stickoxidspeicherkatalysatoren (**LNT** - **L**ean **N**Oₓ **T**rap) reduziert werden. Dabei werden die Stickoxide zunächst - während eines mageren Betriebs der Brennkraftmaschine - im Katalysator absorbiert d. h. gesammelt und gespeichert, um dann während einer Regenerationsphase beispielsweise mittels eines unterstöchiometrischen Betriebs (beispielsweise λ < 0,95) der Brennkraftmaschine bei Sauerstoffmangel reduziert zu werden. Weitere innermotorische Möglichkeiten zur Realisierung eines fetten d. h. eines unterstöchiometrischen Betriebs der Brennkraftmaschine bietet die Abgasrückführung (AGR) und - bei Dieselmotoren - die Drosselung im Ansaugtrakt. Durch Nacheinspritzen von Kraftstoff in den Brennraum der Brennkraftmaschine und Ausschieben des nacheingespritzten, unverbrannten Kraftstoffes in die Abgasleitung während des Ladungswechsels kann das Abgas ebenfalls mit Reduktionsmitteln angereichert werden.

Auf innermotorische Maßnahmen kann verzichtet werden, wenn das Reduktionsmittel direkt in den Abgastrakt eingebracht wird, beispielsweise durch Einspritzen von zusätzlichem Kraftstoff in die Abgasleitung.

Während der Regenerationsphase (deNOₓ)werden die Stickoxide freigegeben und im wesentlichen in Stickstoffdioxid (N₂), Kohlenstoffdioxid (CO₂) und Wasser (H₂O) umgewandelt. Die Häufigkeit der Regenerationsphasen wird durch die Gesamtemission an Stickoxiden und die Speicherkapazität des LNT bestimmt. Die Temperatur des Speicherkatalysators (LNT) sollte vorzugsweise in einem Temperaturfenster zwischen 200°C und 450°C liegen, so dass einerseits eine schnelle Reduktion sichergestellt wird und andererseits keine Desorption ohne Konvertierung der wieder freigegebenen Stickoxide stattfindet, was durch zu hohe Temperaturen ausgelöst werden kann.

Eine Schwierigkeit bei der Verwendung und insbesondere bei der Anordnung des LNT im Abgastrakt ergibt sich aus dem im Abgas enthaltenen Schwefel, der ebenfalls im LNT absorbiert wird und im Rahmen einer sogenannten Desulfurisation (deSOₓ) d. h. einer Entschwefelung regelmäßig entfernt werden muss. Hierfür muss der LNT auf hohe Temperaturen, üblicherweise zwischen 600°C und 700 °C, erwärmt und mit einem Reduktionsmittel versorgt werden, was wiederum durch den Übergang zu einem fetten Betrieb der Brennkraftmaschine erreicht werden kann. Die Entschwefelung des LNT kann zur thermischen Alterung des Katalysators beitragen und die gewollte Konvertierung der Stickoxide gegen Ende seiner Lebensdauer nachteilig beeinflussen.

Grundsätzlich können zur Reduktion der Stickoxide auch selektive Katalysatoren - sogenannte SCR-Katalysatoren (**S**elective **C**atalytic **R**eduction) - eingesetzt werden, bei denen gezielt Reduktionsmittel in das Abgas eingebracht wird, um die Stickoxide selektiv zu vermindern. Als Reduktionsmittel kommen neben Ammoniak und Harnstoff auch unverbrannte Kohlenwasserstoffe zum Einsatz. Letzteres wird auch als HC-Anreicherung bezeichnet, wobei die unverbrannten Kohlenwasserstoffe - wie bereits für den Speicherkatalysator (LNT) weiter oben beschrieben - direkt in den Abgastrakt eingebracht werden oder durch eine Nacheinspritzung von zusätzlichem Kraftstoff in den Brennraum nach der eigentlichen Verbrennung zugeführt werden. Dabei soll der nacheingespritzte Kraftstoff nicht im Brennraum durch die noch ablaufende Hauptverbrennung oder aber durch die - auch nach Beendigung der Hauptverbrennung - hohen Verbrennungsgastemperaturen gezündet werden, sondern während des Ladungswechsels in den Abgastrakt eingeleitet werden.

Brennkraftmaschinen, die von einer Nacheinspritzung Gebrauch machen, sind aber von Hause aus sehr anfällig für eine Verdünnung bzw. Kontaminierung des Öls durch unverbrannte Kohlenwasserstoffe. In Abhängigkeit von der Quantität des nacheingespritzten Kraftstoffes und dem Einspritzzeitpunkt, gelangt ein mehr oder weniger großer Anteil des nacheingespritzten Kraftstoffes auf die Zylinderinnenwand und mischt sich dort mit dem anhaftenden Ölfilm. Anschließend gelangt der Kraftstoff zusammen mit dem Öl und dem Blow-by Gas in das Kurbelgehäuse und trägt so maßgeblich zur Ölverdünnung bei. Die Ölverdünnung nimmt mit steigender Kraftstoffmenge und Verschieben der Nacheinspritzung nach spät zu. Durch die Veränderung der Schmierstoffeigenschaften des Öls hat die Ölverdünnung maßgeblich Einfluss auf den Verschleiß und die Haltbarkeit d. h. die Lebensdauer der Brennkraftmaschine.

Ähnlich wie bereits für die Reduzierung der Stickoxide vorgeschlagen, kann auch Kraftstoff direkt in den Abgastrakt eingebracht werden.

Es muss berücksichtigt werden, dass der Einsatz von zusätzlichem Kraftstoff, sei es aufgrund eines Überganges zu einem fetten Motorbetrieb oder aber infolge der Anreicherung des Abgases mit Kraftstoff, prinzipbedingt den Kraftstoffverbrauch der Brennkraftmaschine nachteilig beeinflusst. Insbesondere die Häufigkeit der Abgasanreicherung hat maßgeblichen und direkten Einfluss auf die zu diesen Zwecken eingesetzte Kraftstoffmenge und damit auf den Gesamtverbrauch. Wird die Abgasanreicherung mittels innermotorsicher Maßnahmen erzielt, ist man beim Betrieb der Brennkraftmaschine d. h. beim Einstellen der Betriebsparameter stark eingeschränkt.

Aus den genannten Gründen kommen zur Reduktion von Stickoxiden zunehmend SCR-Katalysatoren zum Einsatz, bei denen Ammoniak bzw. Harnstoff als Reduktionsmittel bereitgestellt wird.

Aufgrund der Toxizität von Ammoniak (NH₃) wird Ammoniak nicht in Reinform in Kraftfahrzeugen bevorratet und als Reduktionsmittel bereitgestellt. Vielmehr wird häufig Harnstoff als Ausgangsprodukt zur Herstellung von Ammoniak verwendet. Denn Harnstoff kann unter Energieeintrag im Rahmen einer thermolytischen Reaktion in Ammoniak (NH₃) und Isocyansäure (HNCO) aufgespalten werden, was durch die folgende Reaktionsgleichung beschrieben wird:

**CO(NH₂)₂ → NH₃ + HNCO**

Die Isocyansäure (HNCO) kann dann in Anwesenheit von Wasser (H₂O) zu Ammoniak (NH₃) und Kohlendioxid (CO₂) hydrolysiert werden gemäß folgender Reaktionsgleichung:

**HNCO + H₂O → NH₃ + CO₂**

Bei der Bereitstellung des Harnstoffs zur Herstellung von Ammoniak können nach dem Stand der Technik zwei grundsätzlich voneinander verschiedene Vorgehensweisen unterschieden werden.

Zum einen kann der Harnstoff in flüssiger Form d. h. als wässrige Lösung bevorratet und bereitgestellt werden. Die DE 197 27 268 C1 beschreibt ein Verfahren zur Überwachung der Reduktionsmitteldosierung bei einem SCR-Katalysator, um eine Aussage über die Funktionstüchtigkeit der Dosiereinrichtung zu erhalten, wobei der Harnstoff als wässrige Lösung in das Abgas vor dem SCR-Katalysator eingebracht wird.

Zum anderen besteht die Möglichkeit, den Harnstoff in fester Form zur Verfügung zu stellen, was mehrere Vorteile mit sich bringt. Die EP 1 338 562 A1 oder die DE 198 45 944 A beschreibt ein Verfahren und eine Vorrichtung zur Erzeugung von Ammoniak, wobei als Ausgangsprodukt Harnstoff in fester Form verwendet wird.

Ein Vorteil ergibt sich aus dem Umstand, dass Harnstoff in fester Form weniger voluminös ist bzw. fester Harnstoff durch einen - im Vergleich zur wässrigen Lösung - höheren Ammoniakgehalt gekennzeichnet ist. Der Bevorratungsspeicher kann daher mit einem geringeren Speichervolumen ausgeführt werden, was insbesondere im Hinblick auf den Einsatz bei Kraftfahrzeugen einen wesentlichen Vorteil darstellt, bei denen ein möglichst dichtes und effektives Packaging angestrebt wird. Andererseits können - gleiche Volumina der Bevorratungsspeicher vorausgesetzt - die Intervalle, in denen der Speicher neu aufzufüllen ist, im Vergleich zu der Variante, bei denen der Harnstoff als wässrige Lösung bereitgestellt wird, verlängert werden.

Ein vermindertes Speichervolumen - eine gleichgroße zu bevorratende Menge an Ammoniak vorrausgesetzt - stellt auch deshalb einen wesentlichen Vorteil im Hinblick auf die Verwendung bei Kraftfahrzeugen dar, weil der höhere Ammoniakgehalt bzw. das Weglassen des Wassers als Lösungsmittel zu einem verminderten Gesamtgewicht des Kraftfahrzeuges führt, was direkten Einfluss auf den Kraftstoffverbrauch hat und zu einer Reduzierung des Kraftstoffverbrauchs führt.

Zudem muss berücksichtigt werden, dass eine wässrige Harnstoff-Lösung einen vergleichsweise hohen Gefrierpunkt hat und die Lösung bereits bei etwa 13°C von der flüssigen Form in die gefrorene d.h. feste Form übergeht. Dies erfordert aufwendige und kostenintensive Maßnahmen bzw. Einrichtungen zum Frostschutz bzw. zum Auftauen des Systems.

Zusammenfassend kann festgehalten werden, dass die Bereitstellung des Harnstoffs in fester Form zur Reduzierung der Stickoxide in einem SCR-Katalysator gegenüber einer wässrigen Lösung zahlreiche Vorteile aufweist. Aus diesem Grund ist die Bereitstellung und Dosierung von festem Harnstoff Gegenstand der vorliegenden Erfindung.

Nach dem Stand der Technik wird der Harnstoff dabei in Gestalt von kleinen Kügelchen - sogenannten Pellets - mittels eines beheizbaren Reaktorelementes in einem Reaktor aufgespalten. Als Reaktorelement kommt beispielsweise eine beheizbare Reaktorplatte zum Einsatz, wobei die für die Thermolyse erforderliche Energie beim Auftreffen der Harnstoffpellets auf die beheizte Reaktorplatte eingebracht wird. Die Harnstoffpellets verdampfen dabei.

Schwierigkeiten bei der Verwendung von Harnstoffpellets und einer Dosierung mittels Zählen der zugeführten Pellets ergeben sich auch aufgrund der unterschiedlichen Größe und Dichte der einzelnen Harnstoffpellets, aber auch aufgrund einer gewissen Inhomogenität eines konkreten Pellets betreffend Dichte und Ammoniakgehalt, was eine genaue Dosierung des zur Reduktion der Stickoxide erforderlichen Harnstoffes erschwert. Insbesondere eine Überdosierung an Harnstoff ist zu vermeiden, da im Reaktor zuviel aufbereitetes Ammoniak, für das Stickoxide als Reaktionspartner nicht zur Verfügung stehen, den Abgastrakt unverändert durchläuft und in die Umgebung gelangt, was aufgrund der Toxizität des Ammoniaks unter allen Betriebsbedingungen zu verhindern ist.

Die Dosierung d.h. das Einbringen von Harnstoffpellets zur Abgasnachbehandlung erfolgt nach dem Stand der Technik nicht kontinuierlich, sondern intermittierend in diskreten Portionen. Die Funktionstüchtigkeit der Dosiereinheit und die Dosierung als solche können dabei lediglich indirekt überwacht werden, beispielsweise durch Messung der Stickoxidkonzentration (NOₓ) mittels NOₓ-Sensor im nachbehandelten Abgas, wobei eine Überdosierung nur unzureichend detektiert werden kann. Dabei bedient man sich der sogenannten Querempfindlichkeit des NOₓ-Sensor gegenüber Ammoniak.

Aus den genannten Gründen wird eine Fehlfunktion der Dosiereinheit, beispielsweise infolge einer Blockade des Dosiermittels, aber auch ein leerer Bevorratungsspeicher, erst dann detektiert, wenn die Konzentration der Stickoxide im nachbehandelten Abgas infolge fehlender Reduktion angestiegen ist.

Vor diesem Hintergrund ist es die Aufgabe der vorliegenden Erfindung, ein Verfahren zur Dosierung von festem Harnstoff (CO(NH₂)₂) aufzuzeigen, welches eine Dosierung des Harnstoffs mit einer größeren Genauigkeit ermöglicht als herkömmliche Verfahren nach dem Stand der Technik dies zulassen und das eine Überprüfung der Funktionstüchtigkeit der Dosiereinrichtung ermöglicht.

Eine weitere Teilaufgabe der vorliegenden Erfindung ist es, eine Vorrichtung zur Durchführung eines derartigen Verfahrens bereitzustellen.

Gelöst wird die erste Teilaufgabe durch ein Verfahren zur Dosierung von festem Harnstoff (CO(NH₂)₂), insbesondere zur Verwendung als Reduktionsmittel für einen SCR-Katalysator, bei dem
- der Harnstoff in fester Form mittels einer Dosiereinheit einem Reaktor zugeführt wird, und
- der zugeführte Harnstoff in Wechselwirkung mit einem beheizbaren Reaktorelement des Reaktors im Rahmen einer thermolytischen Reaktion unter Energieeintrag in Ammoniak (NH₃) und Isocyansäure (HNCO) aufgespalten wird,
und das dadurch gekennzeichnet ist, dass
- die Temperatur T des Reaktorelementes erfasst wird,
- der Temperaturabfall ΔT des Reaktorelementes infolge der thermolytischen Reaktion des Harnstoffes bestimmt wird,
- der für die thermolytische Reaktion aufgewendete Energieeintrag unter Verwendung dieses Temperaturabfalls ΔT des Reaktorelementes indirekt ermittelt wird,
- die dem Reaktor zugeführte und mittels thermolytischer Reaktion aufgespaltene Harnstoffmenge unter Verwendung dieses zuvor ermittelten Energieeintrags bestimmt wird, und
- die auf diese Weise bestimmte Harnstoffmenge der Dosiereinheit als Eingangssignal bereitgestellt wird.

Gemäß dem erfindungsgemäßen Verfahren wird die für die Thermolyse erforderliche Energie bzw. Wärme bestimmt. Im Rahmen der Beschreibung bevorzugter Ausführungsformen werden weiter unten noch verschiedene Möglichkeiten zur Bestimmung der Energie ausführlich erörtert.

In Kenntnis der im Rahmen der Thermolyse ablaufenden endothermen chemischen Reaktionen, welche zur Aufspaltung des Harnstoffs führen, kann unter Berücksichtigung der eingetragenen d. h. verbrauchten Energie die mittels Thermolyse aufgespaltene Harnstoffmenge und damit die dem Reaktor zugeführte Harnstoffmenge bestimmt werden. Die auf diese Weise bestimmte Harnstoffmenge wird bei der weiteren Dosierung berücksichtigt, indem sie der Dosiereinheit als Eingangssignal zugeführt wird. D. h. die weitere Dosierung erfolgt in Kenntnis der bereits zugeführten Harnstoffmenge.

Ausgehend von der zugeführten Harnstoffmenge und unter Berücksichtigung der Tatsache, dass die im Rahmen der Thermolyse neben Ammoniak gebildete Isocyansäure in einem weiteren Verfahrenschritt unter Anwesenheit von Wasser mittels Hydrolyse zu Ammoniak und Kohlendioxid umgewandelt wird, kann darüber hinaus die dem SCR-Katalysator zugeführte Ammoniakmenge bestimmt werden.

Das erfindungsgemäße Verfahren gestattet damit die Überwachung der Funktionstüchtigkeit der Dosiereinheit. Wird keine Energie verbraucht, kann dies entweder als Indiz dafür gewertet werden, dass der Bevorratungsspeicher leer ist d. h. eine Zuführung von Harnstoff unmöglich ist, weil kein Harnstoff mehr vorhanden ist, oder der nicht erforderliche Energieeintrag muss als Fehlfunktion der Dosiereinheit interpretiert werden, die aus einer Blockade des Dosiermittels, beispielsweise einem Ventil, durch Harnstoffpellets oder einem Defekt des Dosiermittels selbst resultieren kann.

Der wesentliche Vorteil des erfindungsgemäßen Verfahrens gegenüber herkömmlichen Verfahren ist aber, dass die Menge an zugeführtem Harnstoff bestimmt wird, eine Rückführung dieser Information zur Dosiereinheit erfolgt und damit eine wesentlich genauere Dosierung ermöglicht wird. Dadurch können auch geringere Anforderungen an die Harnstoffpellets gestellt werden, was die Betriebskosten für die in Rede stehende Abgasnachbehandlung - nämlich die selektive katalytische Reduktion - senkt. Eine unterschiedliche Dichte und Größe der Pellets und Variationen im Ammoniakgehalt beeinflussen die Qualität d. h. die Genauigkeit der Dosierung nicht, da erfindungsgemäß die absolute zugeführte Harnstoffmenge bestimmt wird.

Die zur Aufspaltung des zugeführten Harnstoffs erforderliche Energie bzw. Wärme wird mittels eines beheizbaren Reaktorelements bereitgestellt, d.h. in den Harnstoff eingetragen. Dabei wird die dem Harnstoff zugeführte Energie gleichzeitig dem Reaktorelement entzogen, was zu einem Temperaturabfall ΔT des Reaktorelementes führt. Die absolute dem Reaktorelement entzogene Wärmemenge kann mit Hilfe des zuvor bestimmten Temperaturabfalls ΔT und unter Berücksichtigung weiterer physikalischer Kennwerte des Reaktorelementes, beispielsweise der spezifischen Wärmekapazität des verwendeten Rektormaterials, berechnet werden. Dabei kann die Temperatur T beispielsweise mit einem Temperatursensor erfasst werden.

Dadurch wird die erste der Erfindung zugrunde liegende Teilaufgabe gelöst, nämlich ein Verfahren zur Dosierung von festem Harnstoff (CO(NH₂)₂) aufzuzeigen, mit dem eine genauere Dosierung des Harnstoffs möglich ist als mit herkömmlichen Verfahren nach dem Stand der Technik.

Weitere vorteilhafte Ausführungsformen gemäß den Unteransprüchen werden im Folgenden erläutert.

Wird zur Erwärmung des Reaktorelementes eine Heizvorrichtung vorgesehen, sind Ausführungsformen des Verfahrens vorteilhaft, bei denen
- der Heizvorrichtung zur Aufspaltung des zugeführten Harnstoffs eine Solltemperatur vorgegeben wird,
- der zur Aufrechterhaltung der Solltemperatur erforderliche Energiebedarf der Heizvorrichtung bestimmt wird, und
- der aufgewendete Energieeintrag unter Verwendung des zur Aufrechterhaltung der Solltemperatur erforderlichen Energiebedarfs ermittelt wird.

Bei der Solltemperatur kann es sich um eine Solltemperatur für das Reaktorelement oder aber um eine Solltemperatur für die Heizvorrichtung selbst handeln. Die dem Reaktorelement zum Zweck der Aufspaltung des Harnstoffes im Rahmen der Thermolyse entzogene Energiemenge und damit der in die Thermolyse investierte Energieeintrag kann bestimmt werden, indem der Energiebetrag ermittelt wird, der erforderlich ist, um den Temperaturabfall Δ*T* des Reaktorelementes zu kompensieren.

Die zweite der Erfindung zugrunde liegende Teilaufgabe wird gelöst durch eine Vorrichtung zur Dosierung von festem Harnstoff als Reduktionsmittel für einen SCR-Katalysator, die
- einen Reaktor zur Aufspaltung von festem Harnstoff in Ammoniak (NH₃) und Isocyansäure (HNCO) im Rahmen einer Thermolyse, und
- eine Dosiereinheit zur Zuführung von Harnstoffpellets zu diesem Reaktor, umfasst und dadurch gekennzeichnet ist, dass
- der Reaktor ein beheizbares Reaktorelement aufweist, um die für die Thermolyse erforderliche Wärmemenge in den Harnstoff einzutragen,
- ein Temperatursensor vorgesehen ist, mit dem die Temperatur T des Reaktorelementes erfassbar ist, und
- dieser Temperatursensor das Mittel darstellt, mit dem die in den zugeführten Harnstoff eingetragene Wärmemenge bestimmbar ist.

Das für das erfindungsgemäße Verfahren Gesagte gilt in analoger Weise für die erfindungsgemäße Vorrichtung, weshalb auf die entsprechenden Ausführungen Bezug genommen wird.

Zur Bestimmung der zur Aufspaltung des Harnstoffes erforderlichen Energiemenge werden spezielle Mittel vorgesehen, nämlich ein Temperatursensor.

Dabei dient in einem ersten Schritt der Temperatursensor zur Erfassung des Temperaturabfalls Δ*T* des Reaktorelementes infolge der thermolytischen Reaktion, so dass der Temperatursensor das Mittel darstellt, mit dem die eingetragene Wärmemenge indirekt bestimmt wird. Die eingetragene Wärmemenge wird dann in einem zweiten Schritt unter Verwendung dieses Temperaturabfalls Δ*T* ermittelt.

Vorteilhaft sind Ausführungsformen der Dosiervorrichtung, bei denen das Reaktorelement mindestens einen beheizbaren Draht aufweist. Dieser mindestens eine Draht kann zu einer Wendel ausgebildet, aufgewickelt oder netzartig angeordnet sein. Dabei treffen die Pellets vorzugsweise von einer Seite auf die Wendel, Wicklung bzw. das Drahtnetz, durchströmen die Wendel bzw. das Drahtnetz und verlassen das Reaktorelement auf der anderen abgewandten Seite.

Vorteilhaft sind auch Ausführungsformen der Dosiervorrichtung, bei denen das Reaktorelement eine Reaktorplatte aufweist. Eine Reaktorplatte bietet Vorteile beim

Eintragen der Wärme in den Harnstoff, da ein plattenförmiges Element eine vergleichsweise große Fläche bereitstellt, um einen Wärmeübergang vom Reaktorelement auf die Harnstoffpellets zu gewährleisten. Beim Auftreffen der Pellets auf die Platte verdampft der feste Harnstoff. Es folgt die thermolytische Aufspaltung.

Vorteilhaft sind Ausführungsformen der Dosiervorrichtung, bei denen eine Heizvorrichtung zur Erwärmung des Reaktorelementes vorgesehen ist.

Vorteilhaft sind dabei Ausführungsformen der Dosiervorrichtung, bei denen eine Messeinrichtung vorgesehen ist, mit welcher der Energiebedarf der Heizvorrichtung messtechnisch erfassbar ist. Die von der Heizvorrichtung verbrauchte Energie d.h. der Energiebedarf kann zur Bestimmung des für die Thermolyse erforderlichen Energieeintrages genutzt werden.

### Bezugszeichen

- AGR: Abgasrückführung
- CO: Kohlenmonoxid
- CO₂: Kohlendioxid
- CO(NH₂)₂: Harnstoff
- deNOₓ: Reinigung des Speicherkatalysators
- deSOₓ: Desulfurisation, Entschwefelung
- HC: unverbrannte Kohlenwasserstoffe
- HNCO: Isocyansäure
- H₂O: Wasser
- NH₃: Ammoniak
- NOₓ: Stickoxide
- LNT: Lean NOₓ Trap
- SCR: Selective Catalytic Reduction
- T: Temperatur des Reaktorelementes
- ΔT: Temperaturänderung

- λ: Luftverhältnis

## Patentansprüche

1. Verfahren zur Dosierung von festem Harnstoff (CO(NH₂)₂), insbesondere zur Verwendung als Reduktionsmittel für einen SCR-Katalysator, bei dem
- der Harnstoff in fester Form mittels einer Dosiereinheit einem Reaktor zugeführt wird, und
- der zugeführte Harnstoff in Wechselwirkung mit einem beheizbaren Reaktorelement des Reaktors im Rahmen einer thermolytischen Reaktion unter Energieeintrag in Ammoniak (NH₃) und Isocyansäure (HNCO) aufgespalten wird,
**dadurch gekennzeichnet, dass**
- die Temperatur *T* des Reaktorelementes erfasst wird,
- der Temperaturabfall Δ*T* des Reaktorelementes infolge der thermolytischen Reaktion des Harnstoffes bestimmt wird,
- der für die thermolytische Reaktion aufgewendete Energieeintrag unter Verwendung dieses Temperaturabfalls Δ*T* des Reaktorelementes indirekt ermittelt wird,
- die dem Reaktor zugeführte und mittels thermolytischer Reaktion aufgespaltene Harnstoffmenge unter Verwendung dieses zuvor ermittelten Energieeintrags bestimmt wird, und
- die auf diese Weise bestimmte Harnstoffmenge der Dosiereinheit als Eingangssignal bereitgestellt wird.

2. Verfahren nach Anspruch 1, wobei zur Erwärmung des Reaktorelementes eine Heizvorrichtung vorgesehen wird, **dadurch gekennzeichnet, dass**
- dieser Heizvorrichtung zur Aufspaltung des zugeführten Harnstoffs eine Solltemperatur vorgegeben wird,
- der zur Aufrechterhaltung der Solltemperatur erforderliche Energiebedarf der Heizvorrichtung bestimmt wird, und
- der aufgewendete Energieeintrag unter Verwendung des zur Aufrechterhaltung der Solltemperatur erforderlichen Energiebedarfs indirekt ermittelt wird.

3. Vorrichtung zur Durchführung eines Verfahrens nach einem der vorherigen Ansprüche zum Zweck der Dosierung von festem Harnstoff als Reduktionsmittel für einen SCR-Katalysator, umfassend
- einen Reaktor zur Aufspaltung von festem Harnstoff in Ammoniak (NH₃) und Isocyansäure (HNCO) im Rahmen einer Thermolyse, und
- eine Dosiereinheit zur Zuführung von Harnstoffpellets zu diesem Reaktor,
**dadurch gekennzeichnet, dass**
- der Reaktor ein beheizbares Reaktorelement aufweist, um die für die Thermolyse erforderliche Wärmemenge in den Harnstoff einzutragen,
- ein Temperatursensor vorgesehen ist, mit dem die Temperatur *T* des Reaktorelementes erfassbar ist, und
- dieser Temperatursensor das Mittel darstellt, mit dem die in den zugeführten Harnstoff eingetragene Wärmemenge bestimmbar ist.

4. Vorrichtung nach Anspruch 3, **dadurch gekennzeichnet, dass**
- das Reaktorelement eine Reaktorplatte aufweist.

5. Vorrichtung nach einem der Ansprüche 3 bis 4, **dadurch gekennzeichnet, dass**
- eine Heizvorrichtung zur Erwärmung des Reaktorelementes vorgesehen ist.

6. Vorrichtung nach Anspruch 5, **dadurch gekennzeichnet, dass**
- eine Messeinrichtung vorgesehen ist, mit welcher der Energiebedarf der Heizvorrichtung messtechnisch erfassbar ist.

## Claims

1. Method for dosing solid urea (CO(NH₂)₂), in particular for use as a reducing agent for an SCR catalytic converter, in which method
- the urea is supplied in solid form to a reactor by means of a dosing unit, and
- the urea supplied is split up, in interaction with a heatable reactor element of the reactor during the course of a thermolytic reaction involving an introduction of energy, into ammonia (NH₃) and isocyanic acid (HNCO),
**characterized in that**
- the temperature *T* of the reactor element is detected,
- the temperature drop Δ*T* of the reactor element as a result of the thermolytic reaction of the urea is determined,
- the energy introduced for the thermolytic reaction is determined indirectly using said temperature drop Δ*T* of the reactor element,
- the urea quantity supplied to the reactor and split up by means of thermolytic reaction is determined using said previously determined energy introduced, and
- the urea quantity determined in this way is provided as an input signal to the dosing unit.

2. Method according to Claim 1, wherein a heating device is provided for heating the reactor element, **characterized in that**
- a setpoint temperature is specified for said heating device for the splitting-up of the supplied urea,
- the energy demand of the heating device necessary for maintaining the setpoint temperature is determined, and
- the energy introduced is determined indirectly using the energy demand necessary for maintaining the setpoint temperature.

3. Device for carrying out a method according to one of the preceding claims for the purpose of dosing solid urea as a reducing agent for an SCR catalytic converter, comprising
- a reactor for splitting up solid urea into ammonia (NH₃) and isocyanic acid (HNCO) during the course of a thermolysis process, and
- a dosing unit for supplying urea pellets to said reactor,
**characterized in that**
- the reactor has a heatable reactor element for introducing into the urea the heat quantity required for the thermolysis process,
- a temperature sensor is provided by means of which the temperature *T* of the reactor element can be detected, and
- said temperature sensor constitutes the means by which the heat quantity introduced into the supplied urea can be determined.

4. Device according to Claim 3, **characterized in that**
- the reactor element has a reactor plate.

5. Device according to either of Claims 3 and 4, **characterized in that**
- a heating device for heating the reactor element is provided.

6. Device according to Claim 5, **characterized in that**
- a measuring device is provided by means of which the energy demand of the heating device can be detected by measurement.

## Revendications

1. Procédé de dosage d'urée (CO(NH₂)₂) solide destinée en particulier à être utilisée comme agent réducteur dans un catalyseur SCR, et dans lequel :
- l'urée est apportée sous forme solide à un réacteur au moyen d'une unité de dosage et
- l'urée apportée interagit avec un élément chauffable du réacteur dans le cadre d'une réaction thermolytique avec apport d'énergie pour se dissocier en ammoniac (NH₃) et en acide isocyanhydrique (HNCO),
**caractérisé en ce que**
- la température *T* de l'élément de réacteur est saisie,
- la chute de température Δ*T* de l'élément de réacteur suite à la réaction thermolytique de l'urée est déterminée,
- l'apport d'énergie consommée pour la réaction thermolytique est déterminé indirectement en utilisant cette chute de température Δ*T* de l'élément de réacteur,
- la quantité d'urée apportée et dissociée par la réaction thermolytique est déterminée en utilisant cet apport d'énergie déterminé précédemment et
- la quantité d'urée déterminée de cette manière est amenée à l'unité de dosage en tant que signal d'entrée.

2. Procédé selon la revendication 1, dans lequel un dispositif de chauffage est prévu pour chauffer l'élément de réacteur,
**caractérisé en ce que**
- une température de consigne de ce dispositif de chauffage pour la dissociation de l'urée apportée est prédéterminée,
- la consommation d'énergie nécessaire pour maintenir la température de consigne du dispositif de chauffage est déterminée et
- l'apport d'énergie consommée est déterminé indirectement en utilisant les besoins en énergie nécessaires pour maintenir la température de consigne.

3. Dispositif en vue de l'exécution d'un procédé selon l'une des revendications précédentes, en vue de doser de l'urée solide utilisée comme agent réducteur pour un catalyseur SCR, le dispositif comprenant :
- un réacteur qui dissocie de l'urée solide en ammoniac (NH₃) et en acide isocyanhydrique (HNCO) dans le cadre d'une thermolyse et
- une unité de dosage qui amène des pastilles d'urée à ce réacteur,
**caractérisé en ce que**
- le réacteur présente un élément chauffable de réacteur qui apporte dans l'urée la quantité de chaleur nécessaire pour la thermolyse,
- une sonde de température qui permet de saisir la température *T* de l'élément de réacteur est prévue et
- cette sonde de température constitue le moyen par lequel la quantité de chaleur introduite dans l'urée apportée peut être déterminée.

4. Dispositif selon la revendication 3, **caractérisé en ce que** l'élément de réacteur présente une plaque de réacteur.

5. Dispositif selon l'une des revendications 3 à 4, **caractérisé en ce qu'**un dispositif de chauffage est prévu pour chauffer l'élément de réacteur.

6. Dispositif selon la revendication 5, **caractérisé en ce qu'**il présente un dispositif de mesure par lequel les besoins en énergie du dispositif de chauffage peuvent être déterminés par technique de mesure.
